# EUROPEAN PATENT SPECIFICATION

(11) **EP 3 340 546 B1**
(45) Date of publication and mention of the grant of the patent: **05.02.2020**
(21) Application number: 16206690.6
(22) Date of filing: 23.12.2016
(51) Int. Cl.: H04L 12/58, G06F 21/31, G06Q 20/38, G06Q 20/42, H04W 12/06, G06F 21/43, H04L 29/06

(54) **ONE-TIME PASSWORD MESSAGE TRANSMISSION**
ÜBERTRAGUNG VON EINMAL-PASSWORT NACHRICHTEN
TRANSMISSION DE MESSAGES DE MOT DE PASSE À USAGE UNIQUE

(43) Date of publication of application: 27.06.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(56) References cited:
- WO-A1-2016/092286
- US-A1- 2016 373 430
- Citrix: "Delivering enterprise information securely on Android, Apple iOS and Microsoft Windows tablets and smartphones. A technical how-to guide - updated for Android 4.2, iOS 6.1, and Windows Phone and Surface 8.", Citrix on line - BYOD and Information Security White Paper, 15 September 2012 (2012-09-15), pages 1-26, XP055098186, Retrieved from the Internet: URL:http://www.citrix.com/content/dam/citr ix/en_us/documents/oth/delivering-enterpri se-information-securely.pdf [retrieved on 2014-01-23]
- MULLINER COLLIN ET AL: "SMS-Based One-Time Passwords: Attacks and Defense", 18 July 2013 (2013-07-18), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 150 - 159, XP047036547, ISSN: 0302-9743 ISBN: 978-3-642-19166-4 * page 151, paragraph 2 One-Time Passwords via SMS - page 152, paragraph 2 One-Time Passwords via SMS *

## Description

The present invention relates to a method of transmitting a one-time password (OTP) in an electronic message according to claim 1, and to a system for transmitting a one-time password in an electronic message according to claim 10.

### Background of the Invention

A one-time password (OTP) is a password which is only valid for a single session or transaction. Such passwords are commonly used in communications which require a high degree of security, such as financial transactions or login processes which needs high security such as online banking. In such a case, a one-time password may be sent by a one-time password provider, such as a bank, to an intended recipient, such as a customer of the bank, to enable the intended recipient to participate in an on-line session or to complete a financial transaction in a secure manner. The one-time password may be used by the intended recipient in association with one or more other pieces of information known only to the recipient, such as a personal identification number (PIN), for example, in a two or more factor authentication process.

It is known to transmit one-time passwords to their intended recipients via a mobile telecommunications network using an electronic messaging service. Various such electronic messaging services are known. These include the short messaging service (SMS), enhanced messaging service (EMS) and various different multimedia messaging services (MMS). However, the display format of electronic messages which are received using one of these electronic messaging services on a screen of a recipient mobile electronic device can vary significantly according to the configuration of an electronic messaging service server which is used to transmit the messages, as well as between different types of recipient mobile devices and different device platforms (*i.e*. mobile device operating systems). Therefore, an electronic message containing a one-time password which is received by a mobile device may or may not be readable in a standby or locked mode of the device's screen. Even if it is at least partially readable when the screen is in such a mode, its display format still may not allow the intended recipient of the one-time password to recover the password from the message and to participate in an on-line session or to complete a financial transaction, without firstly unlocking the screen and possibly also opening the message.

By a standby or locked mode of the screen is meant a mode of the screen which the mobile device enters, for example after a predetermined period of non-use of the device or after being placed in that mode by a user of the device, in order to prevent accidental input of data and/or commands to the device and/or to preserve the level of charge in the device's battery, for example. In the case of mobile electronic devices having a touch-screen for the input of data and/or commands, such a standby or locked mode of the screen may typically be exited and the device reactivated by swiping the screen in a predetermined manner. In the case of mobile electronic devices having a keypad for the input of data and/or commands, such a standby or locked mode of the screen may typically be exited and the device reactivated by depressing at least two different keys of the keypad in a predetermined order and within a predetermined period of time of each other.

Background prior art to the present invention is described in US 2010/0158097, US 2014/0220947, US 2006/0099997, US 2007/0130626 and GB 2512617. Further background prior art also may be found in the following documents.

US 2016/0373430 describes a technique for facilitating distribution of security codes for a two-factor authentication scheme or one-time passwords. The security codes can be sent through a restricted communications channel to a client device.

Citrix: "Delivering enterprise information securely on Android, Apple, iOS and Microsoft Windows tablets and smartphones", Citrix on line - BYOD and Information Security White Paper, 15 September 2012, pp, 1-26, XP055098186 describes issues around the challenge of maintaining effective security and privacy of business information and how they can be addressed effectively with solutions from Citrix.

WO 2016/092286 describes systems and methods to provide a solution to the SIM swap attack problem for users that possess smartphones. The systems and methods require an online banking customer to authenticate a transaction using a combined one-time password (OTP) formed of a remotely generated OTP and a locally generated OTP.

"SMS-Based One-Time Passwords: Attacks and Defence" by Collin Mulliner et al., Network and Parallel Computing, 18July 2013, pp. 150-159, Springer International Publishing, ISBN 978 3 642 19166 4 analyses the security architecture of SMS OTP systems and studies attacks that pose a threat to Internet-based authentication and authorization services.

### Object of the Invention

It is therefore an object of the invention to provide a method of transmitting a one-time password (OTP) in an electronic message and a system for transmitting a one-time password in an electronic message.

### Description of the Invention

The invention is defined in the independent claims. Additional features of the invention are provided in the dependent claims. The object of the invention is solved by a method of transmitting a one-time password (OTP) according to claim 1. The method at least comprises putting the one-time password in an electronic messaging service message, identifying a type of mobile electronic device of an intended recipient of the one-time password, optimizing a display format of the electronic message to the type of mobile device, transmitting the message to the mobile device, and displaying at least a part of the message in the optimized display format on a screen of the mobile device in a standby or locked mode of the screen.

Thus, the intended recipient may view the part of the message displayed on the screen of their mobile device in a format which is optimized to the screen of their device, even when the screen is in a standby or locked mode, and can therefore complete the authentication process for a particular session or transaction, without having to activate the device or open the message.

The electronic messaging service message may be any one of an SMS, EMS and MMS message. The message may be transmitted via any mobile telecommunications network which supports such an electronic messaging service. Thus, the telecommunications network may be a code division multiple access (CDMA) network, time division multiple access (TDMA) network or Global System for Mobile Communications (GSM) network, for example.

Identifying the type of mobile electronic device may comprise locating information concerning the hardware format of the device, such as whether the device is a keypad mobile phone, a touch-screen mobile phone, a tablet or laptop computer, or a phablet. Phablets are usually reckoned to be touch-screen mobile phones having a diagonal screen dimension of between about 130 mm and 180 mm, generally larger than that of a standard touch-screen mobile phone, but generally smaller than that of a tablet computer. Identifying the type of mobile electronic device may also comprise locating information concerning the screen size and/or resolution of the mobile device, the manufacturer and/or model number of the mobile device, and the operating system of the device, for example.

Optimizing the display format of the electronic message to the type of mobile device may comprise one or more of adjusting the size and/or orientation of the electronic message to suit the size and/or orientation (for example, landscape or portrait format) of the screen of the mobile device, selecting at least a part of the content of the electronic message to be displayed on the screen of the mobile device, and adjusting the display format of the electronic message to suit an operating system of the device and/or a user profile of the intended recipient.

Advantageous embodiments of the invention may be configured according to any claim and/or part of the following description.

In one preferred embodiment, the display format of the message may be optimized by an electronic messaging service server, before the electronic message is transmitted from the server to the mobile device of the intended recipient.

In an alternative preferred embodiment, the display format of the message may instead be optimized by the mobile device of the intended recipient after the electronic message has been received by the mobile device.

In one possible preferred embodiment, the type of mobile electronic device may be identified by referring to a look-up table which associates the type of device with the intended recipient. On the one hand, the look-up table may be provided by a provider of the one-time password, such as a bank, which has obtained information from the intended recipient in advance of transmitting the message, about the type of device which belongs to the intended recipient. On the other hand, the look-up table may instead be provided by an operator of the mobile telecommunications network, which has obtained the information from the intended recipient of the one-time password, in advance of transmitting the message, about the type of device which belongs to the intended recipient.

In an alternative possible preferred embodiment, the type of mobile electronic device may instead be identified by interrogating the device before the electronic message is transmitted to the device.

Preferably, before the message is transmitted, the message may be flagged as a one-time password message for the mobile device of the intended recipient to perform a one-time password message-specific operation on it. For example, the flag may alert the device to optimize the display format of the electronic message to the type of the mobile device.

If the one-time password relates to a transaction between a provider of the one-time password and the intended recipient of the one-time password, the part of the message which is displayed by the mobile device of the intended recipient preferably comprises at least the one-time password itself, a transaction reference, and an amount of the transaction. In other possible preferred embodiments, the part of the message which is displayed may alternatively or additionally comprise at least one of a time and/or date stamp for the one-time password and the name of the one-time password provider. Other parts of the electronic messaging service message are preferably not displayed on the screen of the device when the screen is in standby or locked mode, unless and until the intended recipient activates or unlocks the screen and/or opens the message.

In a preferred embodiment, the method further comprises controlling whether the one-time password is displayed in the part of the message which is displayed on the screen of the mobile device. This may be done by excluding the one-time password from the part of the message which is displayed on the screen if the screen is protected by an additional security measure and including the one-time password in the part of the message which is displayed on the screen if the additional security measure is removed. Thus, the intended recipient must comply with the additional security measure, for example by supplying a screen unlocking passcode, before the one-time password will be displayed on the screen. This can be used to prevent other potential viewers of the screen from seeing the one-time password until such time as the intended recipient of the one-time password is satisfied that no-one else can see it. Apart from a screen unlocking passcode, display of the one-time password may alternatively or additionally be protected by one or more other security measures, such as recognizing a fingerprint of the intended recipient, for example. It may also be dependent on another factor, such as sensing pressure on the screen of the device, if the device has a touch-sensitive screen.

In addition to putting the one-time password in an electronic messaging service message and transmitting the message, the method may further comprise generating and providing the one-time password.

The present invention also relates to a system for transmitting a one-time password. The system at least comprises an electronic messaging service server, a mobile electronic device of an intended recipient of the one-time password, an identifier associating a type of the mobile electronic device with the intended recipient, and an optimizer of a display format of the electronic message to the type of the mobile electronic device of the intended recipient. The electronic messaging service server is configured to put the one-time password in an electronic messaging service message and to transmit the message. The mobile electronic device comprises a screen having at least one of a standby mode and a locked mode, and is configured to receive the electronic messaging service message and to display the message in the standby or locked mode of the screen.

The identifier may comprise a look-up table provided by at least one of the one-time password provider and an operator of a mobile telecommunications network connecting the electronic messaging service server with the mobile device of the intended recipient of the one-time password. In such a case, the identifier may be provided to the electronic messaging service server.

Alternatively, the identifier may be at least in part on the device side of the system. In such a case, the type of mobile electronic device of the intended recipient may be identified by the electronic messaging service server interrogating the device before transmitting the electronic message to the device.

The optimizer may be on the server side of the system. In such a case, the display format of the message may be optimized before transmission of the electronic message from the server to the mobile device of the intended recipient.

On the other hand, the server may be configured to flag the message as a one-time password message, and the optimizer may be on the device side of the system and be configured to detect the flag and to operate on the message after receipt of the electronic message by the mobile device, upon detection of the flag.

The system may further comprise a one-time password generator, configured to provide the one-time password to the electronic messaging service server, such as may be found in a bank or other company or institution which is a provider of one-time passwords.

The present invention further relates to a computer program product or a program code or system for executing one or more than one of the herein described methods and systems.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of a first embodiment of OTP message transmission to a plurality of different types of mobile electronic devices;
Fig. 2 is a schematic diagram of a second embodiment of OTP message transmission to a plurality of different types of mobile electronic devices; and
Fig. 3 is a schematic diagram of a third embodiment of OTP message transmission which depends on an additional security measure of a mobile electronic device.

### Detailed Description

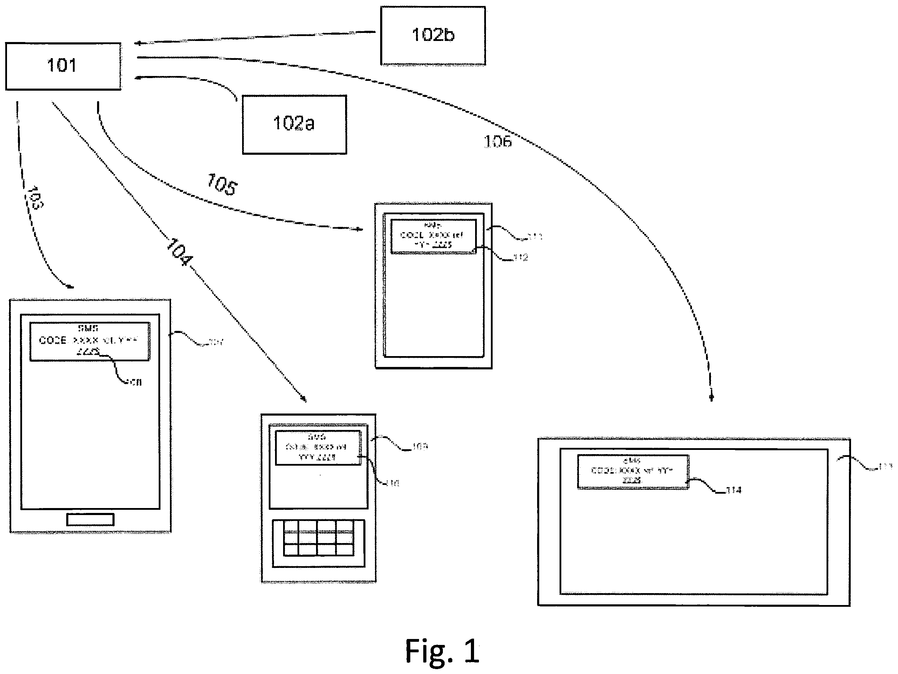

Fig. 1 schematically shows a first embodiment of a technique (method/system) of OTP message transmission to a plurality of different types of message receiving mobile electronic devices. The system comprises an electronic messaging service server 101, a plurality of different types of mobile electronic devices 107, 109, 111, 113, an operator 102a of a mobile telecommunications network connecting the electronic messaging service server 101 with the plurality of different types of mobile electronic devices, and a one-time password provider 102b, such as a bank or other institution. The plurality of different types of mobile electronic devices comprises a phablet 107, a keypad mobile phone 109, a touch-screen mobile phone 111 and a tablet computer 113. Each of the plurality of different types of mobile electronic devices belongs to a different intended recipient of a different one-time password, wherein the intended recipients are all customers of the one-time password provider 102b, for example.

During operation, the one-time password provider 102b generates and provides a plurality of different one-time passwords to the electronic messaging service server 101. The operator 102a of the mobile telecommunications network connecting the electronic messaging service server 101 with the plurality of different types of mobile electronic devices provides the electronic messaging service server 101 with a look-up table, identifying which of the plurality of different types of mobile electronic devices belongs to which of the different intended recipients. Upon receipt of a one-time password from the one-time password provider 102b, the electronic messaging service server 101 puts the one-time password in an electronic message and optimizes the display format of the electronic message to suit the type of the mobile electronic device of the intended recipient of the one-time password, before transmitting the electronic message to the mobile electronic device of the intended recipient. Thus, for example, electronic message 103 containing a first one-time password is transmitted to mobile electronic device 107 and is displayed on a screen of mobile electronic device 107 in a display format 108. On the other hand, electronic message 104 containing a second, different one-time password is transmitted to mobile electronic device 109 and is displayed on a screen of mobile electronic device 109 in a different display format 110. Electronic message 105 containing a third, different one-time password is transmitted to mobile electronic device 111 and is displayed on a screen of mobile electronic device 111 in a different display format 112. Electronic message 106 containing a fourth, different one-time password is transmitted to mobile electronic device 113 and is displayed on a screen of mobile electronic device 113 in a different display format 114. Thus in this embodiment, electronic messages 103, 104, 105, 106, apart from containing different one-time passwords from each other, generally also have different display formats from each other, since they have all been optimized on the server side of the system to suit the different types of mobile electronic devices 107, 109, 111, 113, before they are transmitted to the respective mobile electronic devices.

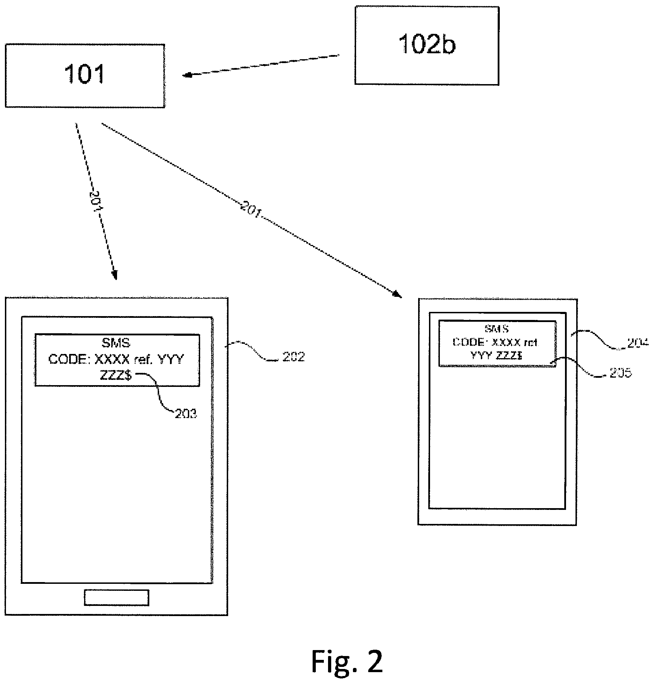

Fig. 2 schematically shows a second embodiment of a technique (method/system) of OTP message transmission to a plurality of different types of message receiving mobile electronic devices. The system again comprises an electronic messaging service server 101, a one-time password provider 102b, and a plurality of different types of mobile electronic devices 202, 204, each of which respectively belongs to a different intended recipient of a different one-time password provided by the one-time password provider 102b. By way of example, the plurality of different types of mobile electronic devices in this case comprises a phablet 202 and a standard-sized touch-screen mobile phone 204.

During operation, the one-time password provider 102b again generates and provides a plurality of different one-time passwords to the electronic messaging service server 101. Upon receipt of a one-time password from the one-time password provider 102b, the electronic messaging service server 101 again puts the one-time password in an electronic message 201 and transmits the electronic message to the mobile electronic device of the intended recipient. In this case, however, in contrast to the embodiment shown in Fig. 1, electronic messages 201 transmitted by the electronic messaging service server 101 to the different mobile electronic devices 202, 204, although they contain different one-time passwords from each other, all have the same display format as each other. Instead, in this embodiment, each of the electronic messages 201 further comprises a flag, flagging each of the electronic messages as a one-time password message for the mobile electronic devices 202, 204 of the intended recipients to perform a one-time password message-specific operation on. In this case, the display format of each electronic message 201 is then optimized by the mobile electronic devices 202, 204 themselves, after receipt of the respective electronic message by the respective mobile electronic device and upon detecting the flag, using their own identity to identify which type of device they are, and therefore to determine how the electronic message 201 should be optimized to suit that type of mobile electronic device. Thus the electronic messages 201 are again displayed on a respective screen of the mobile electronic devices 202, 204 in a respective display format 203, 205 which is optimized to suit the different types of mobile electronic devices.

In both of the examples shown in Figs. 1 and 2, the one-time passwords each relate to a respective transaction between the one-time password provider 102b and the different intended recipients of the different one-time passwords, and the part of the electronic message which is displayed by the mobile electronic devices of the different intended recipients comprises the one-time password itself, a transaction reference, and an amount of the transaction. These three items of data are respectively represented in Figs. 1 and 2 by "CODE: XXXX", "ref. YYY" and "ZZZ$". In both of the examples shown in Figs. 1 and 2, the part of the electronic message which is displayed in the optimized display format on the screen of the mobile electronic device is displayed in a standby or locked mode of the screen. On the other hand, the rest of the electronic message is not displayed in the standby or locked mode of the screen, and remains hidden unless and until the intended recipient re-activates the mobile electronic device by exiting the standby or locked mode of the screen, and possibly also until the intended recipient opens the electronic message.

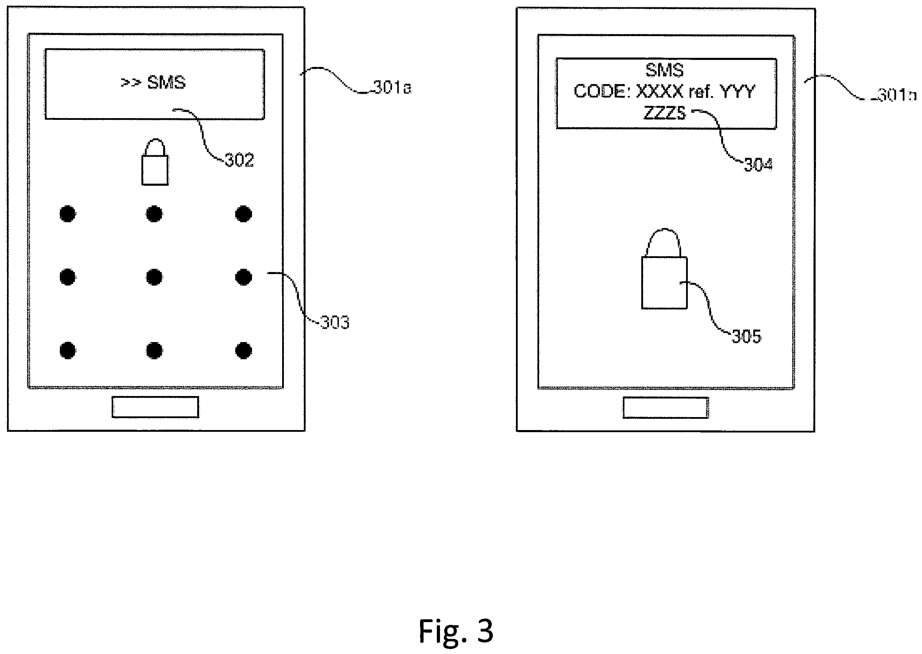

Fig. 3 schematically shows a third embodiment of OTP message transmission, wherein the content of the part of the electronic message which is displayed in the optimized display format depends on an additional security measure of a mobile electronic device 301. The mobile electronic device 301 comprises a screen having a standby or locked mode on which at least a part of an electronic message containing a one-time password can be displayed. In Fig. 3, 301a represents the mobile electronic device when the standby or locked mode of the screen 303 requires entry of a passcode, whereas 301b represents the mobile electronic device when the standby or locked mode of the screen 305 is not passcode protected. When the screen is protected by a passcode, the part of the electronic message 302 which is displayed on the screen of the mobile electronic device excludes the one-time password contained in the electronic message, whereas when this additional security measure is removed, the part of the electronic message 304 which is displayed on the screen of the mobile electronic device includes not only the one-time password contained in the electronic message, but also a transaction reference, and an amount of the transaction which are contained in the electronic message as well. In this way, the intended recipient of the one-time password may control whether the one-time password is displayed in the part of the electronic message which is displayed on the screen of the mobile electronic device.

In summary, therefore, the present invention provides a method of and system for transmitting a one-time password in an electronic message. The method at least comprises putting the one-time password in an electronic message, identifying a type of mobile electronic device of an intended recipient of the one-time password, optimizing a display format of the electronic message to the type of mobile device, transmitting the electronic message to the mobile electronic device, and displaying at least a part of the electronic message in the optimized display format on a screen of the mobile electronic device in a standby or locked mode of the screen. The system at least comprises an electronic messaging service server configured to put the one-time password in an electronic message and to transmit the electronic message, a mobile electronic device of an intended recipient of the one-time password, wherein the mobile electronic device comprises a screen having at least one of a standby mode and a locked mode and the mobile electronic device is configured to receive the electronic message and to display it in the standby or locked mode of the screen, an identifier associating a type of the mobile electronic device with the intended recipient, and an optimizer of a display format of the electronic message to the type of the mobile electronic device of the intended recipient. Thus the intended recipient may view the part of the electronic message displayed on the screen of their mobile electronic device in a format which is optimized to the screen, even when the screen is in a standby or locked mode, and can therefore complete an authentication process for a particular session or transaction using the one-time password, without having to activate the mobile electronic device or open the electronic message.

**Reference Numerals:**

| | | | |
|---|---|---|---|
| 101 | Electronic messaging service server | 114 | Display of OTP electronic message optimized for touch-screen phone |
| 102a | Operator | | |
| 102b | OTP provider | 201 | Non-optimized electronic messages (same for all receiving devices) |
| 103 | Electronic message optimized for phablet (large mobile phone) | 202 | First message receiving mobile electronic device |
| 104 | Electronic message optimized for keypad phone | 203 | Display of OTP electronic message optimized for first mobile electronic device |
| 105 | Electronic message optimized for touch-screen phone | | |
| 106 | Electronic message optimized for tablet computer | 204 | Second message receiving mobile electronic device |
| 107 | Phablet | 205 | Display of OTP electronic message optimized for second mobile electronic device |
| 108 | Display of OTP electronic message optimized for phablet | | |
| 109 | Keypad phone | 301a | Mobile electronic device at locked screen and passcode protected |
| 110 | Display of OTP electronic message optimized for keypad phone | 301b | Mobile electronic device at locked screen and not password protected |
| 111 | Touch-screen phone | | |
| 112 | Display of OTP electronic message optimized for touch-screen phone | 302 | Sensitive content of electronic message not displayed |
| 113 | Tablet computer | 303 | Locked screen with passcode entry required |
| 304 | Display of optimized OTP electronic message with sensitive content of electronic message | | |
| 305 | Locked screen without passcode protection | | |

## Claims

1. A method of transmitting a one-time password in an electronic message, the method at least comprising:
putting the one-time password in an electronic message (103, 104, 105, 106; 201);
and **characterized in**:
identifying a type of mobile electronic device (107, 109, 111, 113; 202, 204; 301a, 301b) of an intended recipient of the one-time password;
optimizing a display format (108, 110, 112, 114; 203, 205) of the electronic message to the type of mobile electronic device;
transmitting the electronic message to the mobile electronic device; and
displaying at least a part of the electronic message in the optimized display format on a screen of the mobile electronic device in a standby or locked mode of the screen.

2. A method according to claim 1, wherein the display format (108, 110, 112, 114; 203, 205) of the electronic message (103, 104, 105, 106; 201) is optimized by an electronic messaging service server (101), before transmission of the electronic message from the electronic messaging service server (101) to the mobile electronic device (107, 109, 111, 113; 202, 204; 301a, 301b) of the intended recipient.

3. A method according to claim 1, wherein the display format (108, 110, 112, 114; 203, 205) of the electronic message (103, 104, 105, 106; 201) is optimized by the mobile electronic device (107, 109, 111, 113; 202, 204; 301a, 301b) of the intended recipient after receipt of the electronic message by the mobile electronic device.

4. A method according to any one of the preceding claims, wherein the type of mobile electronic device (107, 109, 111, 113; 202, 204; 301a, 301b) is identified by referring to a look-up table associating the type of mobile electronic device with the intended recipient.

5. A method according to any one of claims 1 to 3, wherein the type of mobile electronic device (107, 109, 111, 113; 202, 204; 301a, 301b) of the intended recipient is identified by interrogating the mobile electronic device before transmitting the electronic message (103, 104, 105, 106; 201) to the mobile electronic device.

6. A method according to any one of the preceding claims, further comprising, before transmitting the electronic message (103, 104, 105, 106; 201), flagging the electronic message as a one-time password message for the mobile electronic device (107, 109, 111, 113; 202, 204; 301a, 301b) of the intended recipient on which to perform a one-time password message-specific operation.

7. A method according to any one of the preceding claims, wherein the one-time password relates to a transaction between a provider of the one-time password and the intended recipient of the one-time password, and the part of the electronic message (103, 104, 105, 106; 201) which is displayed by the mobile electronic device (107, 109, 111, 113; 202, 204; 301a, 301b) of the intended recipient comprises at least the one-time password, a transaction reference, and an amount of the transaction.

8. A method according to any one of the preceding claims, further comprising controlling whether the one-time password is displayed in the part of the electronic message (103, 104, 105, 106; 201) which is displayed on the screen of the mobile electronic device (107, 109, 111, 113; 202, 204; 301a, 301b) by excluding (302) the one-time password from the part of the electronic message which is displayed on the screen if the screen is protected by an additional security measure (303) and including (304) the one-time password in the part of the electronic message which is displayed on the screen if the additional security measure is removed (305).

9. A method according to any one of the preceding claims, further comprising generating and providing the one-time password.

10. A system for transmitting a one-time password in an electronic message, the system at least comprising:
an electronic messaging service server (101) configured to put the one-time password in an electronic message (103, 104, 105, 106; 201) and to transmit the electronic message;
a mobile electronic device (107, 109, 111, 113; 202, 204; 301a, 301b) of an intended recipient of the one-time password, wherein the mobile electronic device comprises a screen (303, 305) having at least one of a standby mode and a locked mode, and is configured to receive the electronic message and to display the electronic message in the standby or locked mode of the screen;
**characterized by**:
an identifier associating a type of the mobile electronic device with the intended recipient; and
an optimizer of a display format of the electronic message to the type of the mobile electronic device of the intended recipient.

11. A system according to claim 10, wherein the identifier is comprised in a look-up table provided by at least one of a provider (102b) of the one-time password and an operator (102a) of a mobile telecommunications network connecting the electronic messaging service server (101) with the mobile electronic device (107, 109, 111, 113; 202, 204; 301a, 301b) of the intended recipient of the one-time password.

12. A system according to claim 10, wherein the identifier is at least in part on the mobile electronic device (107, 109, 111, 113; 202, 204; 301a, 301b) side of the system.

13. A system according to any one of claims 10 to 12, wherein the optimizer is on the electronic messaging service server (101) side of the system.

14. A system according to any one of claims 10 to 12, wherein the electronic messaging service server (101) is configured to flag the electronic message (103, 104, 105, 106; 201) as a one-time password message, and the optimizer is on the mobile electronic device (107, 109, 111, 113; 202, 204; 301a, 301b) side of the system and is configured to detect the flag and to operate on the electronic message upon detection of the flag.

15. A system according to any one of claims 10 to 14, further comprising a one-time password generator, configured to provide the one-time password to the electronic messaging service server (101).

## Patentansprüche

1. Verfahren zum Übertragen eines Einmalpassworts in einer elektronischen Nachricht, wobei das Verfahren zumindest umfasst:
Einfügen des Einmalpassworts in eine elektronische Nachricht (103, 104, 105, 106; 201);
**gekennzeichnet durch**
Identifizieren einer Art von mobiler elektronischer Vorrichtung (107, 109, 111, 113; 202, 204; 301a, 301b) eines vorgesehenen Empfängers des Einmalpassworts;
Optimieren eines Anzeigeformats (108, 110, 112, 114; 203, 205) der elektronischen Nachricht für den Typ einer mobilen elektronischen Vorrichtung;
Übertragen der elektronischen Nachricht an die mobile elektronische Vorrichtung; und
Anzeigen mindestens eines Teils der elektronischen Nachricht im optimierten Anzeigeformat auf einem Bildschirm des mobilen elektronischen Geräts in einem Standby- oder Sperrmodus des Bildschirms.

2. Verfahren nach Anspruch 1, wobei das Anzeigeformat (108, 110, 112, 114; 203, 205) der elektronischen Nachricht (103, 104, 105, 106; 201) durch einen elektronischen Nachrichtendienstserver (101) optimiert wird, bevor die elektronische Nachricht vom elektronischen Nachrichtendienstserver (101) an die mobile elektronische Vorrichtung (107, 109, 111, 113; 202, 204; 301a, 301b) des vorgesehenen Empfängers übertragen wird.

3. Verfahren nach Anspruch 1, wobei das Anzeigeformat (108, 110, 112, 114; 203, 205) der elektronischen Nachricht (103, 104, 105, 106; 201) durch die mobile elektronische Vorrichtung (107, 109, 111, 113; 202, 204; 301a, 301b) des vorgesehenen Empfängers nach Erhalt der elektronischen Nachricht durch die mobile elektronische Vorrichtung optimiert wird.

4. Verfahren nach einem der vorhergehenden Ansprüche, wobei der Typ einer mobilen elektronischen Vorrichtung (107, 109, 111, 113; 202, 204; 301a, 301b) durch Bezugnahme auf eine Nachschlagetabelle identifiziert wird, die den Typ der mobilen elektronischen Vorrichtung mit dem vorgesehenen Empfänger verbindet.

5. Verfahren nach einem der Ansprüche 1 bis 3, wobei die Art der mobilen elektronischen Vorrichtung (107, 109, 111, 113; 202, 204; 301a, 301b) des vorgesehenen Empfängers durch Abfragen der mobilen elektronischen Vorrichtung vor dem Übertragen der elektronischen Nachricht (103, 104, 105, 106; 201) an die mobile elektronische Vorrichtung identifiziert wird.

6. Verfahren nach einem der vorhergehenden Ansprüche, ferner umfassend, vor dem Übertragen der elektronischen Nachricht (103, 104, 105, 106; 201), das Markieren der elektronischen Nachricht als Einmalpasswortnachricht für die mobile elektronische Vorrichtung (107, 109, 111, 113; 202, 204; 301a, 301b) des vorgesehenen Empfängers, an dem eine Einmalpasswortnachricht spezifische Operation durchgeführt werden soll.

7. Verfahren nach einem der vorhergehenden Ansprüche, wobei sich das Einmalpasswort auf eine Transaktion zwischen einem Anbieter des Einmalpassworts und dem vorgesehenen Empfänger des Einmalpassworts bezieht, und der Teil der elektronischen Nachricht (103, 104, 105, 106; 201), der von der mobilen elektronischen Vorrichtung (107, 109, 111, 113; 202, 204; 301a, 301b) des vorgesehenen Empfängers angezeigt wird, mindestens das Einmalpasswort, eine Transaktionsreferenz und einen Betrag der Transaktion umfasst.

8. Verfahren nach einem der vorhergehenden Ansprüche, ferner umfassend das Steuern, ob das Einmalpasswort in dem Teil der elektronischen Nachricht (103, 104, 105, 106; 201) angezeigt wird, der auf dem Bildschirm der mobilen elektronischen Vorrichtung (107, 109, 111, 113; 202, 204) angezeigt wird; 301a, 301b) durch Ausschließen (302) des Einmalpassworts von dem Teil der elektronischen Nachricht, der auf dem Bildschirm angezeigt wird, wenn der Bildschirm durch eine zusätzliche Sicherheitsmaßnahme (303) geschützt ist, und Einschließen (304) des Einmalpassworts in dem Teil der elektronischen Nachricht, der auf dem Bildschirm angezeigt wird, wenn die zusätzliche Sicherheitsmaßnahme entfernt wird (305).

9. Verfahren nach einem der vorhergehenden Ansprüche, ferner umfassend das Erzeugen und Bereitstellen des Einmalpassworts.

10. System zum Übertragen eines Einmalpassworts in einer elektronischen Nachricht, wobei das System mindestens umfasst:
einen elektronischen Nachrichtendienstserver (101), der konfiguriert ist, um das Einmalpasswort in eine elektronische Nachricht (103, 104, 105, 106; 201) einzufügen und die elektronische Nachricht zu übertragen;
eine mobile elektronische Vorrichtung (107, 109, 111, 113, 202, 204; 301a, 301b) eines beabsichtigten Empfängers des Einmalpassworts, wobei die mobile elektronische Vorrichtung einen Bildschirm (303, 305) mit mindestens einem von einem Standby-Modus und einem gesperrten Modus umfasst und konfiguriert ist, um die elektronische Nachricht zu empfangen und die elektronische Nachricht im Standby- oder gesperrten Modus des Bildschirms anzuzeigen;
**gekennzeichnet durch**:
einen Identifikator, der einen Typ der mobilen elektronischen Vorrichtung mit dem vorgesehenen Empfänger verbindet; und
einen Optimierer eines Anzeigeformats der elektronischen Nachricht für den Typ der mobilen elektronischen Vorrichtung des vorgesehenen Empfängers.

11. System nach Anspruch 10, wobei der Identifikator in einer Nachschlagetabelle enthalten ist, die von mindestens einem der Anbieter (102b) des Einmalpassworts und einem Betreiber (102a) eines Mobilfunknetzes bereitgestellt wird, das den Server (101) des elektronischen Nachrichtendienstes mit der mobilen elektronischen Vorrichtung (107, 109, 111, 113; 202, 204; 301a, 301a) verbindet.

12. System nach Anspruch 10, wobei sich der Identifikator zumindest teilweise auf der Seite der mobilen elektronischen Vorrichtung (107, 109, 111, 113; 202, 204; 301a, 301b) des Systems befindet.

13. System nach einem der Ansprüche 10 bis 12, wobei sich der Optimierer auf der Seite des elektronischen Nachrichtendienstes (101) des Systems befindet.

14. System nach einem der Ansprüche 10 bis 12, wobei der elektronische Nachrichtendienstserver (101) konfiguriert ist, um die elektronische Nachricht (103, 104, 105, 106; 201) als Einmalpasswortnachricht zu kennzeichnen, und der Optimierer auf der Seite der mobilen elektronischen Vorrichtung (107, 109, 111, 113; 202, 204; 301a, 301b) des Systems angeordnet ist und konfiguriert ist, um das Kennzeichen zu erfassen und mit der elektronischen Nachricht beim Erfassen des Kennzeichens zu arbeiten.

15. System nach einem der Ansprüche 10 bis 14, ferner umfassend einen Einmalpasswortgenerator, der konfiguriert ist, um dem elektronischen Nachrichtendienstserver (101) das Einmalpasswort bereitzustellen.

## Revendications

1. Procédé de transmission d'un mot de passe unique dans un message électronique, le procédé comprenant au moins :
mettre le mot de passe unique dans un message électronique (103, 104, 105, 106; 201) ;
caractérisé en
l'identification d'un type de dispositif électronique mobile (107, 109, 111, 113 ; 202, 204 ; 301a, 301b) d'un destinataire prévu du mot de passe unique ;
l'optimisation d'un format d'affichage (108, 110, 112, 114 ; 203, 205) du message électronique au type de dispositif électronique mobile ;
transmettre le message électronique à l'appareil électronique mobile ; et
afficher au moins une partie du message électronique dans le format d'affichage optimisé sur un écran de l'appareil électronique mobile en mode veille ou verrouillé de l'écran.

2. Procédé selon la revendication 1, dans lequel le format d'affichage (108, 110, 112, 114 ; 203, 205) du message électronique (103, 104, 105, 106 ; 201) est optimisé par un serveur de service de messagerie électronique (101), avant transmission du message électronique du serveur de service de messagerie électronique (101) au dispositif électronique mobile (107, 109, 111, 113 ; 202, 204 ; 301a, 301b) du destinataire prévu.

3. Procédé selon la revendication 1, dans lequel le format d'affichage (108, 110, 112, 114 ; 203, 205) du message électronique (103, 104, 105, 106 ; 201) est optimisé par le dispositif électronique mobile (107, 109, 111, 113 ; 202, 204 ; 301a, 301b) du récepteur prévu après réception du message électronique par le dispositif électronique mobile.

4. Procédé selon l'une quelconque des revendications précédentes, dans lequel le type de dispositif électronique mobile (107, 109, 111, 113 ; 202, 204 ; 301a, 301b) est identifié par référence à une table de recherche associant le type de dispositif électronique mobile au destinataire prévu.

5. Procédé selon l'une quelconque des revendications 1 à 3, dans lequel le type de dispositif électronique mobile (107, 109, 111, 113 ; 202, 204 ; 301a, 301b) du destinataire prévu est identifié en interrogeant le dispositif électronique mobile avant de transmettre le message électronique (103, 104, 105, 106 ; 201) au dispositif électronique mobile.

6. Procédé selon l'une quelconque des revendications précédentes, comprenant en outre, avant de transmettre le message électronique (103, 104, 105, 106, 106 ; 201), le marquage du message électronique comme message de mot de passe unique pour le dispositif électronique mobile (107, 109, 111, 113 ; 202, 204 ; 301a, 301b) du destinataire prévu sur lequel effectuer une opération spécifique à un mot de passe unique.

7. Procédé selon l'une quelconque des revendications précédentes, dans lequel le mot de passe à usage unique se rapporte à une transaction entre un fournisseur du mot de passe à usage unique et le destinataire prévu du mot de passe à usage unique, et la partie du message électronique (103, 104, 105, 105, 106 ; 201) qui est affichée par le dispositif électronique mobile (107, 109, 111, 113 ; 202, 204 ; 301a, 301b) du destinataire prévu comprend au moins le mot de passe à usage unique, un numéro de transaction et une quantité de la transaction.

8. Procédé selon l'une quelconque des revendications précédentes, comprenant en outre le contrôle si le mot de passe unique est affiché dans la partie du message électronique (103, 104, 105, 106 ; 201) qui est affichée sur l'écran du dispositif électronique mobile (107, 109, 111, 113 ; 202, 204 ; 301a, 301b) en excluant (302) le mot de passe unique de la partie du message électronique qui est affichée à l'écran si l'écran est protégé par une mesure de sécurité supplémentaire (303) et en incluant (304) le mot de passe unique dans la partie du message électronique qui est affichée à l'écran si la mesure de sécurité supplémentaire est enlevée (305).

9. Procédé selon l'une quelconque des revendications précédentes, comprenant en outre la génération et la fourniture du mot de passe unique.

10. Système pour transmettre un mot de passe unique dans un message électronique, le système comprenant au moins :
un serveur de service de messagerie électronique (101) configuré pour mettre le mot de passe unique dans un message électronique (103, 104, 105, 106 ; 201) et pour transmettre le message électronique ;
un dispositif électronique mobile (107, 109, 111, 113 ; 202, 204 ; 301a, 301b) d'un destinataire prévu du mot de passe unique, dans lequel le dispositif électronique mobile comprend un écran (303, 305) ayant au moins un des modes de veille et de verrouillage, et est configuré pour recevoir le message électronique et pour afficher le message électronique en mode veille ou verrouillage ;
**caractérisé par** :
un identificateur associant un type de dispositif électronique mobile au destinataire prévu ; et
un optimiseur d'un format d'affichage du message électronique au type de l'appareil électronique mobile du destinataire prévu.

11. Système selon la revendication 10, dans lequel l'identificateur est compris dans une table de recherche fournie par au moins l'un d'un fournisseur (102b) du mot de passe à usage unique et d'un opérateur (102a) d'un réseau de télécommunications mobiles reliant le serveur (101) de service de messagerie électronique au dispositif électronique mobile (107, 109, 111, 113 ; 202, 204 ; 301a, 301b) du destinataire du mot de passe à usage unique.

12. Système selon la revendication 10, dans lequel l'identificateur est au moins en partie du côté du dispositif électronique mobile (107, 109, 111, 113 ; 202, 204 ; 301a, 301b) du système.

13. Système selon l'une quelconque des revendications 10 à 12, dans lequel l'optimiseur se trouve du côté du serveur de service de messagerie électronique (101) du système.

14. Système selon l'une quelconque des revendications 10 à 12, dans lequel le serveur de service de messagerie électronique (101) est configuré pour marquer le message électronique (103, 104, 105, 106 ; 201) comme un message de mot de passe unique, et l'optimiseur est du côté du dispositif électronique mobile (107, 109, 111, 113 ; 202, 204 ; 301a, 301b) du système et est configuré pour détecter le drapeau et pour fonctionner sur le message électronique à la détection du drapeau.

15. Système selon l'une quelconque des revendications 10 à 14, comprenant en outre un générateur de mot de passe à usage unique, configuré pour fournir le mot de passe à usage unique au serveur de service de messagerie électronique (101).
